# EUROPEAN PATENT APPLICATION

(11) **EP 1 529 739 A1**
(43) Date of publication of application: **11.05.2005**
(21) Application number: 03025503.8
(22) Date of filing: 06.11.2003
(51) Int. Cl.: B65D 81/00, A47J 31/40, A47J 31/06

(54) **Disposable beverage filter package**

(71) Applicant: Keurig, Incorporated, Wakefield, MA 01880 (US)
(72) Inventor: Lazaris, Nicholas G., Newton, MA 02468 (US); Sweeney, Richard P., Winchester, MA 01890 (US); Beaulieu, Roderick H., Cumberland, RI 02864 (US)
(74) Representative: Specht, Peter, Dipl.-Phys.

(57) **Abstract**

A disposable beverage filter package (10) comprises a flexible and permeable pouch (12) having a sidewall (22) extending downwardly from a top opening to a closed bottom. The pouch (12) is suspended from and supported exclusively by an impermeable lid (14) configured and arranged to close the top opening and to coact with the pouch (12) in defining an enclosed chamber (18). A dry beverage medium (16) is loosely contained within the chamber (18). The lid (14) is piercable to admit a flow of heated liquid under pressure into the chamber (18), with the permeability of the pouch (12) being such that the thus admitted liquid is retained temporarily in the chamber (18) for infusion with the beverage medium (16) before permeating through and flowing downwardly along the exterior of the sidewall (22) as a liquid beverage.

## Description

### BACKGROUND DISCUSSION

### 1. Field of the Invention

This invention relates generally to beverage brewing, and is concerned in particular with a novel and improved disposable beverage filter package for use in single serve beverage brewers.

### 2. Description of the Prior Art

U.S. Patent No. 3,579,357 (Wege et al.) discloses a known beverage filter package wherein a filter bag containing coffee powder is suspended from a lid having an opening closed by a press fitted cover. The lid is configured to support the filter bag in a coffee pot, and the cover is removable to allow liquid to be admitted into and through the filter bag into the coffee pot. In U.S. Patent No. 3,833,740, (Schmidt,) roasted coffee is contained in a package having a permeable wall enclosed by an impermeable outer wrapping. The wrapping is removable, and the package is designed to be submerged in heated water contained in a cup, pot or the like.

Packages of this type are not suitable for use in beverage brewers designed to dispense metered amounts of heated liquid under pressure for rapid flow through and infusion with the dry beverage medium. Rather, infusion occurs mainly as a result of the permeable packages being immersed in the heated liquid.

In U.S. Patent No. 5,840,189 (Sylvan et al.), a cup shaped container is closed by a lid and internally subdivided by a filter element into inner and outer chambers. A dry beverage medium is stored in the inner chamber. The lid is piercable to admit heated liquid under a relatively modest pressure of about 10 psi into the inner chamber for infusion with the beverage medium, and the container also is piercable to extract the resulting beverage that permeates through the filter into the outer chamber. This type of filter cartridge is ideally suited for brewing high quality beverages in brewers of the type described, for example, in U.S. Patent No. 5, 325, 765 (Sylvan et al.). However, the outer cup shaped container is a costly component that contributes disadvantageously to the overall cost of the package.

European patent application No. 0615921A1 discloses a filter package containing a densely packed beverage medium. The bottom, sidewall and top of the package are permeable, with at least one of the top or bottom having areas that are impermeable or of varying permeability to control water flow through the package. The package is not pierced during the brew cycle. Instead, infusion of the beverage medium is effected by forcing hot water through the package at very high pressures on the order of 150 psi.

There exists a need, therefore, for a lower cost disposable beverage filter package that is suitable for use in beverage brewers designed to dispense metered amounts of heated liquid at relatively low pressures for infusion with a loosely confined beverage medium.

It is the object of the present invention to solve this problem. This problem is solved by the features of claim 1.

This disposable beverage filter package comprises:
a flexible and permeable pouch having a sidewall extending downwardly from a top opening to a closed bottom, said pouch being suspended from and supported exclusively by an imperforate impermeable lid configured and arranged to close said top opening and to coact with said pouch in defining an enclosed chamber, and a dry beverage medium loosely contained within said chamber, said lid being piercable to admit a flow of heated liquid under pressure into said chamber, with the permeability of said pouch being such that the thus admitted liquid is retained temporarily in said chamber for infusion with said beverage medium before permeating through and flowing downwardly along the exterior of said sidewall as a liquid beverage.

In a preferred embodiment, said sidewall converges downwardly from said top opening to said closed the bottom.

Further, it is preferred that said lid projects radially outwardly beyond said top opening to define a peripheral rim.

In addition to this, it is also preferred that said lid is provided with a depending skirt and said pouch is sealed at said top opening to said skirt.

According to claim 5, the permeability of an upper region of said sidewall adjacent said top opening is greater as compared to the permeability of a lower region of said sidewall adjacent said closed bottom.

Further, the different permeability of said upper and lower regions are provided by varying the number of layers of material forming said sidewall.

Besides, preferably said lid and said pouch are joined to a circular skirt interposed therebetween.

In another preferred embodiment, said dry beverage medium partially fills said chamber to a level spaced beneath said lid.

It is also preferred that the permeability of said upper region is at least twice that of said lower region.

Furthermore, it is also preferred that the material of said pouch has an air permeability in the range of 65-105 m³/min./m² at ½" water gauge air pressure.

Another preffered embodiment, the material of said pouch has a dry burst strength of 37-62kPa.

### SUMMARY OF THE INVENTION

To this end, the filter package of the present invention comprises a flexible and permeable filter pouch having a sidewall extending downwardly from a top opening to a closed bottom. The pouch is suspended from and supported exclusively by an imperforate impermeable lid configured and arranged to close the top opening of the pouch and to coat with the pouch in defining an enclosed chamber. A dry beverage medium is loosely contained in and preferably only partially fills the chamber to a level spaced beneath the lid. The lid is piercable to admit heated liquid at a relatively low pressure on the order of 10 psi into the chamber, with the permeability of the pouch being such that the thus admitted liquid is retained temporarily in the enclosed chamber for infusion with the beverage medium before permeating through and flowing downwardly along the exterior of the pouch sidewall as a liquid beverage.

These and other features and attendant advantages of the present invention will now be described in greater detail with reference to the accompanying drawings, wherein:

### BRIEF DESCRIPTION OF THE DRAWINGS

Figure 1 is a vertical cross sectional view taken through a preferred embodiment of a disposable beverage filter package in accordance with the present invention;
Figure 2 is a exploded perspective view of the package components; and
Figure 3 is a view similar to Figure 1, on a reduced scale, showing the beverage filter package in use during a brew cycle.

### DETAILED DESCRIPTION OF PREFERRED EMBODIMENT

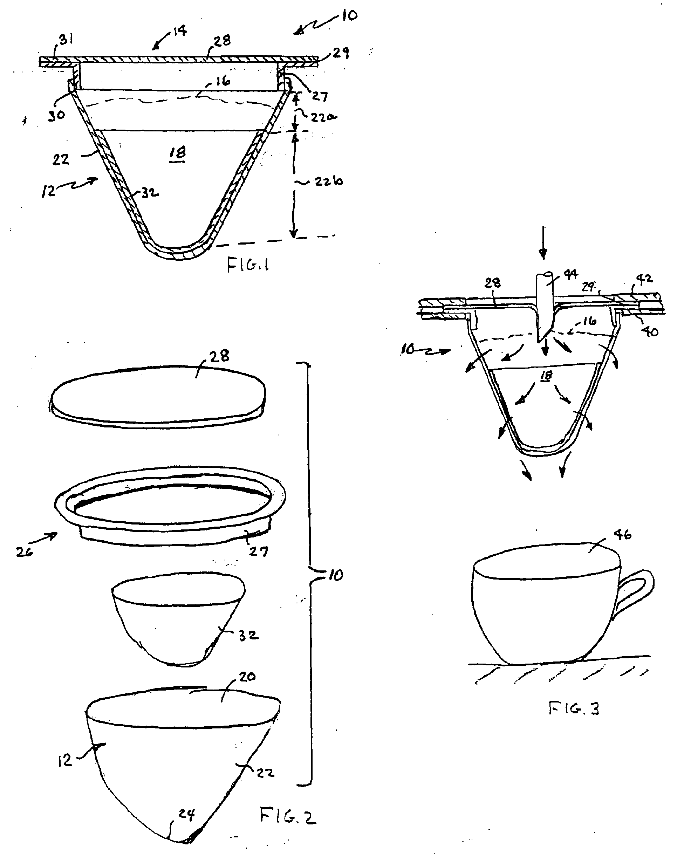

With reference initially to Figure 1, a disposable beverage filter package in accordance with the present invention is generally depicted at 10. The package includes, as basic components, a flexible permeable filter pouch 12, an imperforate impermeable lid 14, and a measured amount of a dry beverage medium 16, typically ground roasted coffee, loosely contained within an enclosed chamber 18 defined by the filter pouch and the lid.

Referring additionally to Figure 2, it will be seen that the filter pouch 12 has a top opening 20 and a side wall 22 extending downwardly to a closed bottom 24. Preferably, as shown, the top opening 20 is circular, and the side wall 22 converges downwardly and gradually from the top opening to the closed bottom 24 to thereby define a hollow cone.

The lid 14 may conveniently be of a two part construction comprising a circular collar 26 with a depending skirt 27, and an impermeable imperforate disc 28 sealed to the skirt 27 as at 29. The upper end of the filter pouch is sealed to the skirt 27 as at 30, and the lid is configured and dimensioned to close and extend radially beyond the top pouch opening 20 to define a circular rim 31.

The side wall 22 of the filter pouch 12 advantageously has an upper region 22a with a permeability that is greater than that of a lower region 22b. This difference in permeability may be provided by various means, most conveniently by increasing the thickness of the lower region 22b, for example by adding an inner cone shaped insert 32 of the same material as that of the outer wall.

Candidates for the filter pouch material include those that are economical, readily available, and disposable without raising environmental concerns. A preferred example is a heat sealable paper with taste neutrality and excellent particle retention supplied by J.R. Crompton of Lydney, Gloucester, England under product designation No. 483,402.

Preferably, the filter pouch material has an air permeability in the range of 65-105 m³/min./m² (cubic meters of air per minute per square meter of material) at 1/2" water gauge air pressure, a wet burst strength of 27 to 47 kPa (Kilopascal), and a dry burst strength of 38-62 kPa.

Preferably, the permeability of the upper region 22a is at least twice that of the lower region 22b.

The collar 27 is selected for its compatibility with the filter pouch and disc materials to accommodate heat sealing, and may for example, comprise a rigid thermoformed polyethylene having a thickness in the range of 0.025 - 0.035 inches.

The lid disc 28 may comprise a laminate of aluminum foil and a sealant film such as polyethylene. Alternatively, it may comprise a plain polyethylene film of sufficient thickness for consistent needle puncture.

In use, as shown in Figure 3, the peripheral rim 29 of the lid 14 is seated on a circular ledge 40 of a brew chamber, and is removably held in place by any convenient means, e.g., an annular vertically adjustable platen 42. The filter pouch 12 is fully exposed and is supported exclusively by the lid 14. A sharpened tubular needle 44 pierces the disc 28 and serves as an inlet through which a metered amount of heated liquid is injected into the chamber 18 for infusion with the dry beverage medium 16. The yieldability of the disc material coacts with the needle exterior in creating a seal that prevents the thus injected liquid from escaping as a backflow through the punctured opening.

The permeability of the filter pouch 12 is such that the heated liquid is retained temporarily in the chamber 18 for infusion with the beverage medium 16 before permeating through and flowing downwardly along the exterior of the side wall 22 as a liquid beverage to be received, for example, in an underlying cup 46. The reduced permeability of the filter pouch at its lower region 22b optimizes the infusion process.

In light of the foregoing, it will now be appreciated by those skilled in the art that various changes and modifications may be made to the embodiment herein chosen for purposes of disclosure without departing from the scope of the claims appended hereto. Non limiting examples of such changes and modifications include the use of differently shaped filter pouches and lids, and coating and/or densifying the lower region of the filter pouch to achieve decreased permeability.

## Claims

1. A disposable beverage filter package comprising:
a flexible and permeable pouch having a sidewall extending downwardly from a top opening to a closed bottom, said pouch being suspended from and supported exclusively by an imperforate impermeable lid configured and arranged to close said top opening and to coact with said pouch in defining an enclosed chamber, and a dry beverage medium loosely contained within said chamber, said lid being piercable to admit a flow of heated liquid under pressure into said chamber, with the permeability of said pouch being such that the thus admitted liquid is retained temporarily in said chamber for infusion with said beverage medium before permeating through and flowing downwardly along the exterior of said sidewall as a liquid beverage.

2. The disposable beverage filter package as claimed in claim 1 wherein said sidewall converges downwardly from said top opening to said closed the bottom.

3. The disposable beverage filter package according to one or more of the preceding claims wherein said lid projects radially outwardly beyond said top opening to define a peripheral rim.

4. The disposable beverage filter package according to one or more of the preceding claims wherein said lid is provided with a depending skirt and said pouch is sealed at said top opening to said skirt.

5. The disposable beverage filter package according to one or more of the preceding claims wherein the permeability of an upper region of said sidewall adjacent said top opening is greater as compared to the permeability of a lower region of said sidewall adjacent said closed bottom.

6. The disposable beverage filter package according to one or more of the preceding claims wherein the different permeability of said upper and lower regions are provided by varying the number of layers of material forming said sidewall.

7. The disposable beverage filter package according to one or more of the preceding claims wherein said lid and said pouch are joined to a circular skirt interposed therebetween.

8. The disposable beverage filter package according to one or more of the preceding claims wherein said dry beverage medium partially fills said chamber to a level spaced beneath said lid.

9. The disposable beverage filter package according to one or more of the preceding claims wherein the permeability of said upper region is at least twice that of said lower region.

10. Furthermore, it is also preferred that the material of said pouch has an air permeability in the range of 65-105 m³/min./m² at ½" water gauge air pressure.

11. The disposable beverage filter package according to one or more of the preceding claims wherein the material of said pouch has a dry burst strength of 37-62kPa.
